Europäisches Patentamt

European Patent Office

Office européen des brevets

(19)

(11) Numéro de publication: **0 069 603**
**B2**

(12) **NOUVEAU FASCICULE DE BREVET EUROPEEN**

(45) Date de publication du nouveau fascicule du brevet: **31.10.90**

(21) Numéro de dépôt: **82400965.8**

(22) Date de dépôt: **26.05.82**

(51) Int. Cl.⁵: **C 08 F 8/50,** C 08 F 210/02

(54) **Procédé de traitement de polyéthylène de basse densité linéaire par des peroxydes organiques, générateurs de radicaux libres.**

(30) Priorité: **22.06.81 FR 8112184**

(43) Date de publication de la demande:
**12.01.83 Bulletin 83/02**

(45) Mention de la délivrance du brevet:
**08.05.85 Bulletin 85/19**

(45) Mention de la decision concernant l'opposition:
**31.10.90 Bulletin 90/44**

(84) Etats contractants désignés:
**AT BE CH DE FR GB IT LI NL SE**

(56) Documents cités:

| | |
|---|---|
| EP-B-1 028 95 | FR-A-2 405 961 |
| DE-A-2 803 598 | FR-A-2 563 833 |
| FR-A-1 234 398 | GB-A- 893 463 |
| FR-A-1 377 951 | GB-A-1 379 853 |
| FR-A-2 378 804 | US-A-2 993 882 |

Brochure AKZO CHEMIE "Noury Initiators"
M.Sittig, Polyolefin Resin Processes, 1961, Gulf
Publishing Co.

Le dossier contient des informations techniques
présentées postérieurement au dépôt de la
demande et ne figurant pas dans le présent
fascicule.

(73) Titulaire: **BP Chimie Société Anonyme
Tour Neptune - La Défense 1 20, place de Seine
F-92400 Courbevoie (FR)**

(72) Inventeur: **Thiersault, Jean Paul
7, Lotissement la Croix d'Aymard
F-13920 Saint-Mitre les Remparts (FR)**
Inventeur: **Senez, Alain
1, rue de la Lavande
F-13480 Callas-Cabries (FR)**
Inventeur: **Vidal, Jean Louis
Le Meyran, boulevard Gérard Philipe
F-13500 Martigues (FR)**

(74) Mandataire: **Patentanwälte Beetz sen. - Beetz
jun. Timpe - Siegfried - Schmitt-Fumian
Steinsdorfstrasse 10
D-8000 München 22 (DE)**

EP 0 069 603 B2

Courier Press, Leamington Spa, England.

# EP 0 069 603 B2

## Description

L'invention a pour objet un procédé de traitement de copolymères du type polyéthylènes de basse densité linéaires (en abrégé "PEBDL"), procédé destiné à conférer à ces copolymères une meilleure aptitude à la transformation en objets finis tels que films, à l'aide de machines et dans les conditions utilisées couramment pour la transformation du polyéthylène de basse densité obtenu par polymérisation radicalaire de l'éthylène sous haute pression, dit "polyéthylène haute pression" (en abrégé "PEHP").

Il est bien connu de fabriquer ces PEBDL par copolymérisation de mélanges d'éthylène et d'une alpha-oléfine supérieure contenant environ de 4 à 20% en poids de cette alpha-oléfine supérieure à titre de comonomère, sous une pression inférieure à 4 MPa. Les copolymères ainsi obtenus possèdent une densité inférieure à 0,935 et une structure moléculaire caractérisée par des branchements relativement courts qui sont répartis statistiquement le long de la chaîne moléculaire et dont la nature est fonction du comonomère utilisé. Ces PEBDL ont un indice de branchement généralement supérieur à 0,95, l'indice de branchement d'un polyéthylène ou d'un copolymère d'éthylène et d'une autre alphaoléfine étant mesuré par le rapport entre sa viscosité intrinsèque déterminée en solution dans le trichlorobenzène et la viscosité intrinsèque calculée d'un polyéthylène de structure parfaitement linéaire et de répartition moléculaire identique, mesurée par chromatographie par perméation de gel.

Par rapport aux PEHP de densité inférieure également à 0,935, obtenus par polymérisation radicalaire de l'éthylène sous haute pression, qui sont des polymères dont la structure moléculaire présente des branchements longs et dont l'indice de branchement est généralement de l'ordre de 0,6 à 0,7, les polyéthylènes de basse densité linéaires possèdent de nombreux avantages, notamment:

une rigidité supérieure à densité égale,

une résistance mécanique à chaud supérieure,

une résistance à la fissuration sous tension améliorée,

un moindre bloquant, c'est-à-dire, lors de la fabrication de film en gaine, une meilleure aptitude à l'ouverture de la gaine après sa mise à plat,

une meilleure étirabilité et une résistance à la perforation améliorée sous forme de film.

Cependant les PEBDL ont généralement une transparence inférieure à celle des PEHP. Par ailleurs, leurs techniques de mise en oeuvre plus proches de celles des polyéthylènes de haute densité, supérieure à 0,935, obtenus également selon des procédés de polymérisation sous basse pression, que de celles relatives aux PEHP peuvent apparaître parfois comme un handicap dans les applications telles que la fabrication de films d'épaisseur de 40 à 200 μm (microns) dits "films épais", domaine dans lequel le PEHP est bien implanté sur le marché et la technologie difficilement modifiable.

La demanderesse a maintenant trouvé un procédé de traitement des copolymères de type PEBDL, améliorant leur transparence et les rendant aptes à la transformation en objets finis tels que le film dans les conditions de mise en oeuvre utilisées couramment pour la transformation du polyéthylène haute pression, sans altérer sensiblement leurs excellentes propriétés mécaniques.

L'invention concerne donc un procédé de traitement de PEBDL d'indice de fluidité, à 190°C sous 2,16 kg selon NFT 51016-Méthode A, compris entre 0,3 et 50 et d'indice de branchement supérieur à 0,95, procédé consistant en ce que le PEBDL est traité thermomécaniquement à l'état fondu, à température inférieure à 220°C, en présence d'un peroxyde organique générateur de radicaux libres, mis en oeuvre en quantité comprise entre 0,005 et 1% en poids, notamment entre 0,02 et 0,2% en poids, de sorte que le PEBDL traité ait un indice de branchement compris entre 0,8 et 0,95 et que son taux de gel mesuré par extraction au xylène bouillant selon l'essai normalisé précisé ci-dessous soit nul.

Le taux de gel ou taux d'insolubles dans le xylène bouillant est mesuré à l'aide d'un extracteur de type Kumagawa; on utilise un échantillon de polymère de 1 g environ et 0,4 l de xylène comme solvant. Les conditions d'extraction sont les suivantes:

Pressure atmosphérique: $10^5 \pm 1\,500$ Pa,

température: 130°C,

durée d'extraction: 6 heures.

Le résidu de l'échantillon, s'il existe, est rincé à l'acétone, puis séché sous azote et placé sous étuve.

Le taux de gel est le rapport en pourcentage entre le poids final de l'échantillon après extraction et son poids initial.

Le PEBDL traité selon l'invention peut être obtenu par copolymérisation d'un mélange constitué, pour 80 à 96% en poids, d'éthylène et, pour 4 à 20% en poids, d'une alpha-oléfine supérieure, comportant de 3 à 8 atomes de carbone, choisie notamment parmi le propylène, le n-butène-1, le n-hexène-1, le méthyl-4-pentène-1, le n-octène-1, la copolymérisation étant effectuée selon l'un des procédés sous basse pression connus, en particulier, sous pression inférieure à 4 MPa, en présence d'un catalyseur contenant un composé d'un métal de transition des sous-groupes IVa, Va et VIa de la classification périodique des éléments, ce catalyseur étant généralement activé par un composé organométallique tel qu'un composé organoaluminique.

En particulier, le PEBDL peut être obtenu par colymérisation réalisée en phase gazeuse. Des résultats spécialement intéressants sont notamment obtenus lorsque le PEBDL est préparé selon la procédé de

2

copolymérisation d'éthylène et d'une alpha-oléfine supérieure en lit fluidisé décrit dans le brevet français No 2 405 961.

Selon l'invention, on utilise de préférence des peroxydes organiques, générateurs de radicaux libres dont la décomposition est négligeable en dessous de 120°C et dont la durée de demi-vie est élevée, généralement supérieure à 1 minute à 160°C, tels que par exemple les peroxydes organiques suivants: peroxyde de di-terbutyle, peroxyde de dicumyle, 2-5 diméthyl 2-5 di(terbutylperoxy) hexane, 2-5 diméthyl 2-5 di (terbutylperoxy) hexy-n-, butyl 4-4 bis (terbutylperoxyvalérate), hydroperoxyde de dicumyle, 1-1 bis (terbutylperoxy) 3-3-5 triméthylcyclohexane, 1-3 di(terbutylperoxy) di-isopropylbenzène.

La quantité de peroxyde organique mise en oeuvre, comprise entre 0,005% et 1% en poids et généralement comprise entre 0,02% et 0,2% en poids du copolymère, est évidement fonction de la nature du peroxyde employé. Il convient d'utiliser une quantité de peroxyde organique à la fois suffisante pour obtenir une modification de la structure du copolymère amenant son indice de branchement à une valeur inférieure à 0,95, et pas trop élevée pour éviter une réticulation du copolymère nuisible à la qualité des objets finis' notamment lorsqu'il s'agit de fabriquer du film, l'absence de réticulation du copolymère étant caractérisée par une valeur nulle du taux de gel.

Selon l'invention, le peroxyde organique, générateur de radicaux libres, doit être convenablement mélangé au PEBDL avant réaction, à une température inférieure à la température de décomposition du peroxyde, le mélange obtenu étant ensuite soumis au traitement thermomécanique à l'état fondu, à température supérieure à la température de décomposition du peroxyde.

Il est possible d'effectuer le mélange de poudre de PEBDL et d'un peroxyde organique se présentant sous forme liquide ou solide à l'aide d'un mélangeur à poudre de type courant. Il est essentiel que l'homogénéisation du mélange soit réalisée de façon aussi parfaite que possible. En effet, une homogénéisation insuffisante du mélange conduirait, après le traitement thermomécanique à température supérieure à la température de décomposition du peroxyde, à des produits partiellement réticulés, ayant un taux de gel non nul.

Il est donc préférable de réaliser l'homogénéisation du mélange de peroxyde organique et de PEBDL par malaxage à l'état fondu, à l'aide, par exemple, d'une machine d'extrusion de type courant, à une température inférieure à la température de décomposition du peroxyde.

Une méthode simple de réalisation de cette homogénéisation consiste à introduire le mélange de PEBDL et de peroxyde directement dans la machine d'extrusion utilisée pour transformer le PEBDL en objets finis, la zone d'alimentation de cette machine étant maintenue à une température inférieure à la température de décomposition du peroxyde organique. De cette manière l'homogénéisation du mélange de PEBDL et de peroxyde peut ainsi être réalisée convenablement avant passage dans la zone de traitement proprement dite où la température est supérieure à la température de décomposition du peroxyde.

Les meilleurs résultats sont toutefois obtenus lorsque le copolymère préalablement mélangé avec la quantité convenable de peroxyde organique est soumis à un traitement thermomécanique à l'état fondu en 2 étapes, toutes deux réalisées à température comprise entre les limites de 130°C et de 220°C, dans des conditions telles que la viscosité du copolymère soit suffisamment faible et que la dégradation de celui-ci soit suffisamment limitée, là première étape, ou étape d'homogénéisation du mélange étant réalisée dans des conditions de température et de durée selon lesquelles moins de 5% du peroxyde organique sont décomposés, la deuxième étape, ou étape de réaction étant réalisée dans des conditions de température et de durée selon lesquelles plus de 90% en poids du peroxyde organique sont décomposés.

Dans la pratique le traitement thermomécanique peut être réalisé à l'aide de machines d'extrusion de type courant, le temps de traitement ayant une durée déterminée, comprise le plus souvent entre 0,5 et 1,5 minutes; on connaît par ailleurs, en fonction de la température, la durée de demi-vie du peroxyde utilisé, c'est-à-dire la durée au bout de laquelle 50% du peroxyde sont décomposés.

Dans ces conditions, le traitement thermomécanique en 2 étapes du copolymère additionné de peroxyde est réalisé, en ce qui concerne la première étape, à une température à laquelle la durée de demi-vie du peroxyde est supérieure à 13 fois la durée de cette première étape de traitement et, en ce qui concerne la deuxième étape, à une température à laquelle la durée de demi-vie du peroxyde est inférieure à 0,4 fois la durée de cette deuxième étape de traitement.

Les copolymères de type PEBDL traités selon l'invention dont l'indice de branchement est compris entre 0,8 et 0,95 et le taux de gel nul, sont particulièrement aptes à la fabrication de films ayant une bonne transparence et d'excellentes propriétés mécaniques, selon les techniques courantes d'extrusion, à l'aide des machines et dans les conditions de mise en oeuvre utilisées pour la fabrication de films à partir de polyéthylène de basse densité obtenus sous haute pression.

Exemple

Le PEBDL mis en oeuvre est un copolymère d'éthylène et de propylène de marque NATENE® BD 302. Il possède les caractéristiques suivantes:

Teneur en motifs dérivés du propylène: 12% en poids
Densité suivant norme NFT 51063: 0,920
Indice de fluidité sous 2,16 kg à 190°C suivant norme NFT 51016-Méthode A: 2
Indice de branchement: 1
Teneur en additif de stabilisation:

3

Stéarate de calcium: 0,15% en poids Butylhydroxytoluène: 0,10% en poids

Le peroxyde organique utilisé, de marque VAROX®, est le 2-5-di-méthyl 2-5 di(terbutylperoxy) hexane déposé sur support minéral inerte à raison de 50 parties en poids de peroxyde pour 50 parties en poids de support.

Les durées de demi-vie de ce peroxyde organique sont:
- de 15 minutes à 150°C,
- de 5 minutes à 160°C,
- et de 6 secondes à 200°C.

Le traitement est effectué en 2 étapes à l'aide d'une extrudeuse à double vis de diamètre de 28 mm de marque Werner-Pfleiderer.

### Première étape

On effectue l'homogénéisation du mélange de peroxyde et de PEBDL à l'état fondu lors d'un premier passage dans l'extrudeuse pendant une durée de 1 minute à 150°C.

### Deuxième étape

Cette étape consiste en un deuxième passage dans la même extrudeuse, le traitement étant réalisé à 200°C pendant une durée de 1 minute, au cours de laquelle le peroxyde subit une décomposition pratiquement totale.

Le tableau 1 donne les caractéristiques principales du PEBDL "NATENE® BD 302" traité dans ces conditions avec des doses croissantes de peroxyde, variant de 0,02% à 0,2%. A titre de comparaison, le tableau 1 donne également les caractéristiques correspondantes du "NATENE® BD 302" non traité, de deux autres PEBDL non traités, d'indice de fluidité 1,1 et 0,5 ainsi que de trois polyéthylènes "'haute pression" A, B et C d'indice de fluidité de 2, 0,75 et 0,3.

On constate tout d'abord que le traitement au peroxyde ne modifie pas la densité du copolymère "NATENE® BD 302" mais à une influence sur l'indice de branchement qui décroît avec les taux de peroxyde utilisés pour se rapprocher des valeurs des indices de branchement des polyéthylènes "haute pression".

On constate que le PEBDL "NATENE® BD 302" traité au peroxyde possède une très bonne fluidité sous tension de cisaillement élevée. 11 possède notamment une viscosité apparente à 190°C sous tension de cisaillement de $9,08.10^4$ Pa, inférieure à celle d'un PEBDL non traité de densité et d'indice de fluidité comparable. En outre, lorsque la quantité de peroxyde mise en oeuvre est supérieure à 0,1% en poids du PEBDL, la viscosité apparente à 190°C sous tension de cisaillement de $9,08.10^4$ Pa est inférieure à celle d'un polyéthylène haute pression de même indice de fluidité.

On constate également que l'énergie d'activation de la viscosité du PEBDL "NATENE® BD 302" traité au peroxyde décroît de $-29,7$ à $-35,1$ $10^3$ J/mole lorsque les taux de peroxyde utilisés croissent, et que sa valeur se rapproche de celles des énergies d'activation des polyéthylènes "haute pression".

Toutes ces modifications des paramètres rhéologiques des PEBDL résultant du traitement au peroxyde selon l'invention facilitent grandement la mise en oeuvre de ces copolymères selon les techniques utilisées pour la transformation en film du polyéthylène haute pression. En particulier, les débits d'extrusion sont augmentés à conditions d'extrusion identiques, l'autoéchauffement de la matière étant notablement réduit.

On constate par ailleurs que les excellentes propriétés mécaniques du PEBDL telles que résistance à la traction, allongement à la rupture, résistance à la fissuration sous tension ou résistance au "stress-cracking" ainsi que sa résistance à la chaleur ne sont pas altérées par le traitement aux peroxydes selon l'invention.

On constate enfin que le traitement au peroxyde améliore nettement la transparence du PEBDL.

TABLEAU 1

| | Taux de peroxyde (% en poids) | Densité | Indice de branchement | Indice de fluidité (1) | Viscosité apparente (poises) ($10^2$ mPa.s) (2) | Energie d'notivation de la viscosité ($10^3$ J/moile) | Résistance traction à la rupture (MPa) | Allongement à la rupture (%) | Résistance au stress-cracking (heures) (3) | Taux de gel |
|---|---|---|---|---|---|---|---|---|---|---|
| Polyéthylène "haute pression" A | — | 0,920 | 0,7 | 2 | $0,82.10^4$ | −43,5 | | | 2 | 0 |
| Polyéthylène "haute pression" B | — | 0,920 | 0,7 | 0,75 | $2,4.10^4$ | | | | | 0 |
| Polyéthylène "haute pression" C | — | 0,918 | 0,7 | 0,3 | $6,9.10^4$ | −48,9 | 12,5 | 900 | | 0 |
| PEBDL "NATENE® BD 302" | — | 0,920 | 1 | 2 | $1,4.10^4$ | −29,7 | 13,7 | 1700 | 70 | 0 |
| PEBDL "NATENE® BD 405" | — | 0,916 | 0,96 | 1,1 | $4,4.10^4$ | | | | >1000 | 0 |
| PEBDL "NATENE® BD 404" | — | 0,913 | 0,96 | 0,5 | $13.10^4$ | | | | >1000 | 0 |
| PEBDL "NATENE® BD 302" traité au peroxyde | 0,02 | 0,920 | 0,94 | 1,6 | $1.75.10^4$ | −32,2 | 13,7 | 1700 | 250 | 0 |
| | 0,05 | 0,920 | 0,88 | 1,05 | $2,15.10^4$ | −32,6 | 13,8 | 1600 | 900 | 0 |
| | 0,1 | 0,920 | 0,84 | 0,75 | $2,45.10^4$ | −33,0 | 13,8 | 1500 | >1000 | 0 |
| | 0,2 | 0,920 | 0,82 | 0,30 | $3,7.10^4$ | −35,7 | 13,8 | 1400 | >1000 | 0 |

(1) Indice de fluidité sous 2,16 kg à 190°C suivant norme NFT 51016-Méthode A
(2) Viscosité apparente à 190°C sous tension de cisaillement de $9,08.10^4$ Pa
(3) Résistance au stress-cracking suivant norme ASTM D 1693.

EP 0 069 603 B2

**Revendications**

1. Procédé de traitement de copolymères du type "polyéthylène de basse densité linéaire", de densité inférieure à 0,935, d'indice de fluidité à 190°C sous 2,16 kg selon norme NFT 51016-Méthode A compris entre 0,3 et 50, et d'indice de branchement supérieur à 0,95 obtenus par copolymérisation en phase gazeuse d'un mélange d'éthylène et d'une alpha-oléfine supérieure contenant de 4 à 20% en poids de cette alpha-oléfine supérieure, sous une pression inférieure à 4 MPa, en présence d'un catalyseur contenant un composé d'un métal de transition des sous-groupes IVa, Va, VIa de la Classification Périodique des Eléments, ce catalyseur étant activé par un composé organométallique, procédé caractérisé en ce que les copolymères sont traités thermomécaniquement à l'état fondu, à température inférieure à 220°C, en présence d'un peroxyde organique, générateur de radicaux libres, mis en oeuvre en quantité comprise entre 0,005 et 1% en poids, notamment entre 0,02 et 0,2% en poids, telle que le copolymère traité ait un indice de branchement compris entre 0,8 et 0,95 et que son taux de gel, mesuré par extraction au xylène bouillant, soit nul.

2. Procédé revendiqué en 1, selon lequel le copolymère est obtenu à partir d'un mélange d'éthylène et d'une alpha-oléfine supérieure comportant de 3 à 8 atomes de carbone, notamment le propylène, le n-butène-1, le methyl-4-pentène-1, le n-hexène-1 ou le octène-1.

3. Procédé revendiqué en 1, selon lequel le générateur de radicaux libres est constitué d'un peroxyde organique, choisi parmi le peroxyde de di-terbutyle, le peroxyde de dicumyle, le 2-5 diméthyl 2-5 di(terbutylperoxy)hexane, le 2-5 diméthyl 2-5 di(terbutylperoxy) hexyne, le butyl 4-4 bis(terbutylperoxyvalérate), l'hydroperoxyde de dicumyle, le 1-1 bis(terbutylperoxy)3-3-5 triméthylcyclohexane, le 1-3 di(terbutylperoxy)di-isopropylbenzène.

4. Procédé revendiqué en 1, selon lequel le copolymère est soumis à l'état fondu à un traitement thermomécanique en deux étapes à températures comprises entre 130°C et 220°C, la première étape du traitement étant réalisée à une température à laquelle le peroxyde organique utilisé a une durée de demi-vie supérieure à 13 fois la durée de cette première étape de traitement, la deuxième étape du traitement étant réalisée à une température à laquelle le peroxyde organique utilisé à une durée de demi-vie inférieure à 0,4 fois la durée de cette deuxième étape de traitement.

5. A titre de produits industriels nouveaux, les copolymères traités selon le procédé décrit dans l'une des revendications précédentes.

6. Application des copolymères revendiqués en 5, à la fabrication d'objets finis tels que des films, selon les techniques couramment utilisées pour la transformation du polyéthylène "haute pression".

**Patentansprüche**

1. Verfahren zur Behandlung von Copolymeren vom Typ der linearen Polyethylene niederer Dichte (LLDPE) mit einer Dichte unter 0,935, einem Fließindex nach der Norm NFT 51016, Methode A, unter einem Druck von 2,16 kg und bei 190°C von 0,3 bis 50 und einem Verzweigungsindex über 0,95, die hergestellt sind durch Copolymerisation eines Gemischs von Ethylen und einem höheren α-Olefin mit einem Gehalt an diesem höheren α-Olefin von 4 bis 20 Gew.-% in der Gasphase unter einem Druck unter 4 MPa in Gegenwart eines Katalysators, der eine Verbindung eines Übergangsmetalls der Untergruppen IVa, Va, VIa des Periodensystems enthält und mit einer Organometallverbindung aktiviert wurde, dadurch gekennzeichnet, daß die Copolymeren in geschmolzenem Zustand bei einer Temperatur unter 220°C in Gegenwart eines organischen Peroxids als freie Radikale erzeugender Verbindung, das in einer Menge von 0,005 bis 1 Gew.-% und insbesondere in einer Menge von 0,02 bis 0,2 Gew.-% eingesetzt wird, thermomechanisch derart behandelt werden, daß das behandelte Copolymer einen Verzweigungsindex von 0,8 bis 0,95 aufweist und sein durch Extraktion mit siedendem Xylol gemessener Gelgehalt gleich Null ist.

2. Verfahren nach Anspruch 1, dadurch gekennzeichnet, daß das Copolymer aus einem Gemisch von Ethylen und einem höheren α-Olefin mit 3 bis 8 Kohlenstoffatomen, insbesondere Propylen, n-1-Buten, 4-Methyl-1-penten, n-1-Hexen oder 1-Octen, hergestellt ist.

3. Verfahren nach Anspruch 1, dadurch gekennzeichnet, daß die freie Radikale erzeugende Verbindung aus einem organischen Peroxid besteht, das ausgewählt ist unter Ditert.-butylperoxid, Dicumylperoxid, 2,5-Dimethyl-2,5-di-(tert.-butylperoxy)-hexan, 2,5-Dimethyl-2,5-di-(tert.-butylperoxy)-hexin, Butyl-4,4-bis(tert.-butylperoxyvalerat), Dicumylhydroperoxid, 1,1-Bis(tert.-butylperoxy-3,3,5-trimethylcyclohexan und 1,3-Di-(tert.-butylperoxy)-diisopropylbenzol.

4. Verfahren nach Anspruch 1, dadurch gekennzeichnet, daß das Copolymer im geschmolzenen Zustand einer thermomechanischen Behandlung in zwei Stufen bei Temperaturen von 130 bis 220°C unterzogen wird, wobei die erste Behandlungsstufe bei einer Temperatur, bei der das eingesetzte organische Peroxid eine Halbwertszeit aufweist, die größer ist als die dreizehnfache Dauer der ersten Behandlungsstufe, und die zweite Behandlungsstufe bei einer Temperatur, bei der das eingesetzte organische Peroxid eine Halbwertszeit aufweist, die kleiner ist als die 0,4-fache Dauer dieser zweiten Behandlungsstufe, durchgeführt werden.

5. Nach dem Verfahren nach einem der vorhergehenden Ansprüche behandelte Copolymere als neue technische produkte.

6. Verwendung der Copolymeren nach Anspruch 5 zur Herstellung von fertigen Formkörpern wie Filmen nach üblicherweise zur Umwandlung von Hochdruck-Polyethylen angewandten Verfahren.

**Claims**

1. Process for treating linear low density polyethylene type copolymers, with a density less than 0.935, a melt index comprised between 0.3 and 50 at 190°C under 2.16 kg according to NFT 51016 standard, Method A, and a branching index greater than 0.95, obtained by copolymerisation of a mixture of ethylene and a higher α-olefin containing 4 to 20% by weight of this higher olefin, in the gas phase under a pressure of less than 4 MPa, in the presence of a catalyst containing a compound of a transition metal of the groups IVa, Va, VIa of the Periodic Table, activated by an organometallic compound, characterized by thermomechanical treatment of the molten copolymers, at a temperature of 220°C, in the presence of an organic peroxide being a compound generating free radicals, used in a quantity of 0.005 to 1% by weight, and particularly of 0.02 to 0.2% by weight, such that the copolymer treated has a branching index of 0.8 to 0.95, and that its gel content as measured by extraction with boiling xylene is equal to zero.

2. Process according to Claim 1, wherein the copolymer is obtained from a mixture of ethylene and a higher α-olefin comprising 3 to 8 carbon atoms, in particular propylene, 1-n-butene, 4-methyl-1-pentene, 1-n-hexene and 1-n-octene.

3. Process according to Claim 1, wherein the compound generating free radicals consists of an organic peroxide selected from di-t-butyl peroxide, dicumyl peroxide, 2,5-dimethyl-2,5-di-(t-butylperoxy)-hexane, 2,5-dimethyl-2,5-di(t-butylperoxy)-hexyne, butyl-4,4-bis(t-butylperoxyvalerate), dicumylhydroperoxide, 1,1-bis(t-butylperoxy)-3,3,5-trimethylcyclohexane, 1,3-di(t-butylperoxy)-diisopropylbenzene.

4. Process according to Claim 1, wherein the copolymer is subjected in the molten state to a thermomechanical treatment in two stages at temperatures comprised between 130°C and 220°C, the first stage of the treatment being carried out at a temperature at which the organic peroxide used has a half-life period greater than 13 times the duration of this first treatment stage, and the second stage of treatment being carried out at a temperature at which the organic peroxide used has a half-life period of less than 0.4 times the duration of this second treatment period.

5. As new industrial products, the copolymers treated according to the process described in one of the foregoing Claims.

6. Use of the copolymers according to Claim 5 for the production of finished shaped articles such as films, in accordance with techniques currently being used to convert high-pressure polyethylene.